# EUROPÄISCHE PATENTSCHRIFT

(11) **EP 3 897 160 B1**
(45) Veröffentlichungstag und Bekanntmachung des Hinweises auf die Patenterteilung: **26.10.2022**
(21) Anmeldenummer: 19835624.8
(22) Anmeldetag: 17.12.2019
(51) Int. Cl.: A21B 7/00, B65G 1/06, G07F 17/00, B65G 47/64, A21B 1/48, G07F 11/26, G07F 11/42, G07F 11/58

(54) **VORRICHTUNG UND VERFAHREN ZUM BEHANDELN VON PRODUKTEN**
DEVICE AND METHOD FOR TREATING PRODUCTS
DISPOSITIF ET PROCÉDÉ DE MANIPULATION DE PRODUITS

(30) Priorität: 17.12.2018 DE 102018009765
(43) Veröffentlichungstag der Anmeldung: 27.10.2021
(73) Patentinhaber: EngRoTec Systems GmbH, 91616 Neusitz (DE)
(72) Erfinder: HUPRICH, Werner, 91620 Ohrenbach (DE)
(74) Vertreter: Aera A/S
(86) Internationale Anmeldenummer: PCT/DE2019/101102
(87) Internationale Veröffentlichungsnummer: WO 2020/125867

(56) Entgegenhaltungen:
- EP-A1- 1 329 398
- EP-B1- 1 329 398
- WO-A1-2010/089667
- DE-A1- 19 848 274
- FR-A1- 2 937 502
- JP-A- S63 147 706
- US-A- 4 687 119

## Beschreibung

Die Erfindung betrifft eine Vorrichtung und ein Verfahren zum Behandeln von Produkten, insbesondere zum Bearbeiten und Ausgeben von Backwaren.

Im Zuge der Digitalisierung können übliche Aufgaben, die bisher von einem Menschen ausgeführt wurden, durch Maschinen erledigt werden. Dies gilt besonders für sich identisch wiederholende Prozesse. Vor allem im Hinblick auf die Behandlung von Produkten, insbesondere Konsumprodukten und Lebensmitteln, wird ein solcher Austausch möglich sein. Beispielsweise erfreuen sich Backautomaten, wie sie insbesondere bei Discountern eingesetzt werden, erhöhter Beliebtheit in der Konkurrenz zur klassischen Bäckerei. Allerdings bringt die Vollautomatisierung solch einer Anlage, ohne nennenswerten Einsatz von Arbeitskräften verschiedene Probleme, wie Umsetzbarkeit, erhöhte Kosten und/oder staatliche Auflagen mit sich. US4687119A offenbart eine Vorrichtung nach dem Oberbegriff des Anspruchs 1 und ein Verfahren nach dem Oberbegriff des Anspruchs 9.

Die Aufgabe der vorliegenden Erfindung definiert sich deshalb durch das zur Verfügung stellen einer verbesserten Vorrichtung und eines verbesserten Verfahrens zum Behandeln von Produkten.

Gemäß einem Aspekt umfasst die Erfindung eine Vorrichtung mit den Merkmalen des Anspruchs 1.

Unter Austauschen von Produkten im Sinne der Offenbarung ist zu verstehen, dass Produkte von dem Bedienband auf das Lagerband übertragen werden oder umgekehrt. Vorzugsweise sind das Bedienband und das Lagerband jeweils durch bewegbare Bänder gekennzeichnet, die um Umlenkrollen an den Enden der jeweiligen Bänder bewegbar sind. Bevorzugt weist das Band des Bedienbands Aussparungen auf. Durch diese Aussparungen kann Luft zirkulieren, was beispielsweise zum schnelleren Abkühlen von heißen Produkten, insbesondere Backwaren, führen kann.

Weiterhin bevorzugt besteht das Band des Bedienbands aus Metall, Gewebe, Kunststoff und/oder Kombinationen daraus, bevorzugt besteht das Band des Bedienbands aus Metall, Kunststoff und/oder Kombinationen daraus, bevorzugter besteht das Band des Bedienbands aus Metall. Durch die Verwendung von Metall ist das Band des Bedienbands besonders robust und hitzebeständig.

Vorzugsweise ist das Band des Bedienbands als Stabgeflechtsband ausgestaltet.

Vorzugsweise ist das Band des Bedienbands werkzeuglos entnehmbar. Hierdurch wird bei einem Defekt oder für die Reinigung ein schneller Austausch der Bänder ermöglicht.

Bänder, die keine Bedienbänder sind, werden als Lagerbänder bezeichnet. Lagerbänder in einer Ausgabeeinheit können auch als Ausgabebänder bezeichnet werden, Lagerbänder in einer Bearbeitungseinheit können auch als Bearbeitungsbänder bezeichnet werden. Lagerbänder zeichnen sich dadurch aus, dass sie durch ein Bediengerät angetrieben werden können. Lagerbänder werden im Sinne der Erfindung auch als zu koppelnde Bänder bezeichnet.

Die Bänder der Lagerbänder bestehen vorzugsweise aus Gewebe, Kunststoff, mit Kunststoff beschichtetem Gewebe und/oder Kombinationen daraus.

Vorzugsweise sind die Bänder der Lagerbänder werkzeuglos entnehmbar. Hierdurch wird bei einem Defekt oder für die Reinigung ein schneller Austausch der Bänder ermöglicht.

Gemäß einer Ausführungsform weisen die Bänder der Lagerbänder keine Aussparungen auf.

Gemäß einer weiteren Ausführungsform weisen die Bänder der Lagerbänder Aussparungen auf. Durch diese Aussparungen kann Luft zirkulieren, was beispielsweise zum schnelleren Abkühlen von heißen Produkten, insbesondere Backwaren, führen kann. Weiterhin bevorzugt bestehen die Bänder der Lagerbänder aus Metall, Gewebe, Kunststoff und/oder Kombinationen daraus, bevorzugt bestehen die Bänder der Lagerbänder aus Metall, Kunststoff und/oder Kombinationen daraus, bevorzugter bestehen die Bänder der Lagerbänder aus Metall. Durch die Verwendung von Metall sind die Bänder der Lagerbänder besonders robust und hitzebeständig.

In einer bevorzugten Ausführungsform weist wenigstens ein Teil der Bänder der Lagerbänder Aussparungen auf. Gemäß dieser Ausführungsform besteht wenigstens ein Teil der Bänder der Lagerbänder aus Metall, Gewebe, Kunststoff und/oder Kombinationen daraus, bevorzugt besteht wenigstens ein Teil der Bänder der Lagerbänder aus Metall, Kunststoff und/oder Kombinationen daraus, bevorzugter besteht wenigstens ein Teil der Bänder der Lagerbänder aus Metall. Die Bänder der Lagerbänder ohne Aussparungen sind wie weiter oben beschrieben ausgestaltet.

Insbesondere weisen die Bänder der Lagerbänder der wenigstens einen Bearbeitungseinheit Aussparungen auf, sofern in der Bearbeitungseinheit eine Erhitzung der Produkte, insbesondere Backwaren vorgenommen wird. In dieser Ausführungsform bestehen die Bänder der Lagerbänder der Bearbeitungseinheit aus Metall, Gewebe, Kunststoff und/oder Kombinationen daraus, bevorzugt bestehen die Bänder der Lagerbänder aus Metall, Kunststoff und/oder Kombinationen daraus, bevorzugter bestehen die Bänder der Lagerbänder aus Metall.

Gemäß einer bevorzugten Ausführungsform ist das Bedienband mehrteilig, vorzugsweise zweiteilig, ausgebildet.

Vorzugsweise ist das Lagerband ebenfalls mehrteilig, vorzugsweise zweiteilig, ausgebildet.

Durch eine Mehrteiligkeit des Bedienbandes und/oder des Lagerbandes kann eine präzisere Behandlung der Produkte sichergestellt werden.

Bevorzugt weist das Bediengerät wenigstens einen Sensor, vorzugsweise zwei Sensoren auf, der die Beladung des Bedienbandes erfasst und überwacht. Dieser wenigstens eine Sensor, vorzugsweise zwei Sensoren, ist ein akustischer, magnetischer, induktiver, kapazitiver, resistiver, mechanischer, elektrischer, thermoelektrischer, piezoelektrischer, elektronischer und/oder optischer Sensor. Vorzugsweise handelt es sich um einen optischen Sensor, bevorzugt um eine Kamera, eine Lichtschranke und/oder Kombinationen daraus, die die Produkte, die mit dem Bedienband ausgetauscht werden, passieren müssen.

In einer weiteren bevorzugten Ausführungsform weist das Bediengerät einen Gewichtssensor auf, der die Beladung des Bedienbandes erfasst und überwacht. Dieser Sensor ist bevorzugt ein akustischer, magnetischer, induktiver, kapazitiver, resistiver, mechanischer, elektrischer, thermoelektrischer, piezoelektrischer, elektronischer, elektromechanischer und/oder optischer Sensor, bevorzugter ein elektromechanischer und/oder optischer Sensor, noch bevorzugter ein elektromechanischer Sensor.

Beispiele für Sensoren, die in der erfindungsgemäßen Vorrichtung und insbesondere dem Bediengerät Anwendung finden können, sind Ultraschallsensoren, Beschleunigungssensoren, Drucksensoren, Kraftsensoren, Neigungsmesser, Wegaufnehmer, Füllstandsensoren, Durchflussmesser und Gewichtssensoren.

Mechanische Sensoren können Manometer, Dehnungshebel, Federwaage, Hebelwaage und/oder Thermometer sein. Ein thermoelektrischer Sensor kann als Thermoelement ausgestaltet sein. Resistive Sensoren können als Dehnungsmessstreifen (DMS), Hitzedraht und/oder Halbleiter-DMS und/oder zum Beispiel Pt100 Sensor ausgestaltet sein. Ein piezoelektrischer Sensor kann ein Beschleunigungssensor. Kapazitative Sensoren können Drucksensoren sein. Induktive Sensoren können als Neigungsmesser, Kraftsensoren und/oder Wegaufnehmer eingesetzt werden. Optische Sensoren sind beispielsweise Lichtschranken, Kameras, CCD-Sensoren und/oder Fotozellen. Akustische Sensoren können als Füllstandsensor, Doppelbogenkontrolle und/oder Ultraschall-Durchflussmesser ausgestaltet sein. Beispiele für magnetische Sensoren sind Hall-Sensoren und Reed Kontakte.

Gemäß einer weiteren bevorzugten Ausführungsform weist das Bediengerät wenigstens eine Lichtschranke und einen Gewichtssensor zur Erfassung und Überwachung der Beladung des Bedienbands auf.

Das Bediengerät weist auch eine Fahreinheit auf. Die Fahreinheit des Bediengeräts ist eingerichtet, um das Bediengerät von einer ersten Position in eine zweite, von der ersten Position verschiedenen Position zu bewegen. Beispielsweise wird das Bediengerät durch die Fahreinheit zu einer Lager- oder Bearbeitungsvorrichtung bewegt. Die Fahreinheit weist einen Positionssensor auf. Durch den Positionssensor wird die Position des Bediengeräts bestimmt. Durch die genaue Bestimmbarkeit der Position kann das Bediengerät zu anderen Vorrichtungen ausgerichtet werden, das heißt, es findet eine Ausrichtung des Bediengeräts zur jeweiligen Vorrichtung, die Lagerbänder umfasst, statt.

Durch die Kopplungsvorrichtung kann eine Bewegung des Bedienbandes auf das Lagerband übertragen werden. Auf diese Weise können Produkte zwischen dem Bedienband und dem Lagerband ausgetauscht werden, ohne dass die jeweiligen Einheiten, die Lagerbänder aufweisen, eine aktive Komponente zum Austauschen von Produkten beinhalten.

Vorzugsweise weist das Bediengerät mindestens zwei Kopplungsvorrichtungen auf. Weiter bevorzugt weist das Bediengerät mindestens vier Kopplungsvorrichtungen auf.

Vorzugsweise sind die Kopplungsvorrichtungen seitlich zu dem Band, im Falle von einer Vielzahl von Bedienbändern, seitlich zu den Bändern, angeordnet. Die Kopplungsvorrichtungen kontaktieren nicht das Band des Bedienbandes.

Die Kopplungsvorrichtung, bevorzugt die mindestens zwei Kopplungsvorrichtungen, ist so eingerichtet, dass sie das Bedienband und das zu koppelnde Lagerband zueinander ausrichtet, ein kraftübertragendes Element der Kopplungsvorrichtung mit einem kraftaufnehmenden Element des zu koppelnden Lagerbandes arretiert und die Position des Bedienbands zum Lagerband verriegelt.

Gemäß einer bevorzugten Ausführungsform sind im gekoppelten Zustand das Band des Bedienbands und das Band eines angekoppelten Lagerbands ohne Kontakt. Eine direkte Kontaktierung der Bänder des Bedien- und Lagerbandes wird durch die Kopplung mittels der Kopplungsvorrichtung, bevorzugt der mindestens zwei Kopplungsvorrichtungen, vermieden. Durch die Vermeidung einer direkten Kontaktierung der Bänder wird verhindert, dass Verschmutzungen von einem Band auf das andere übertragen werden. Auch wird die Übertragung von Wärme von einem Band zum anderen Band minimiert, da keine direkte Berührung stattfindet.

Vorzugsweise kontaktiert die Kopplungsvorrichtung weder das Band des Bedienbands noch das Band eines Lagerbandes im gekoppelten Zustand. Weiter bevorzugt ist die wenigstens eine Kopplungsvorrichtung, bevorzugt sind die wenigstens zwei Kopplungsvorrichtungen, seitlich neben dem Band des Bedienbands angeordnet.

Die Lagerbänder weisen Elemente auf, die mit der Kopplungsvorrichtung des Bedienbands zusammenwirken. So weisen die Lagerbänder Elemente zur Kraftaufnahme, sogenannte kraftaufnehmende Elemente, wodurch die Kraft von dem Bedienband auf das Lagerband übertragen wird, auf.

Weiterhin weist das Lagerband ein Element auf, das für die Verriegelung zwischen Bedienband und Lagerband notwendig ist. Hierbei handelt es sich um ein Verbindungselement, welches formschlüssig und/oder kraftschlüssig mit dem Verbindungselement, auch als Verriegelungselement bezeichnet, der Kopplungsvorrichtung zusammenwirkt.

Durch das Zusammenwirken der vorgenannten Elemente werden die drei Funktionen Ausrichten, Arretieren und Verriegeln zwischen Bedien- und Lagerband herbeigeführt.

Die Kopplungsvorrichtung kann einteilig oder mehrteilig ausgestaltet sein.

Ebenso können das Kraftaufnahmeelement und das Verbindungselement des Lagerbands einteilig oder auch mehrteilig ausgestaltet sein. Vorzugsweise sind das Kraftaufnahmeelement und das Verbindungselement zweiteilig ausgestaltet.

Vorzugsweise umfasst die Kopplungsvorrichtung ein Element zur Kraftübertragung, auch als kraftübertragendes Element bezeichnet, vom Bedienband auf das Lagerband. Vorzugsweise ist die Kopplungsvorrichtung wenigstens zweiteilig aufgeführt, wobei ein Element zur Kraftübertragung und ein Element zur Verriegelung, auch als Verbindungselement bezeichnet, der Kopplungsvorrichtung vorhanden ist.

Nach einer bevorzugten Ausführungsform ist die Kopplungsvorrichtung eingerichtet, das Bedienband mit dem Lagerband mechanisch, vorzugsweise mit Hilfe eines Zwischenelements, bevorzugt eines Zwischenrads, zu koppeln.

Die Kopplungsvorrichtung umfasst vorzugsweise ein Zwischenelement, bevorzugt ein Zwischenrad zur Umkehr der Rotationsbewegung des Bedienbandes, da bei einer direkten mechanischen Kopplung des Bedienbandes mit dem Lagerband, das Bedienband und das Lagerband gegenläufig angetrieben würden, sodass keine Produkte zwischen dem Bedienband und dem Lagerband ausgetauscht werden können.

Gemäß einer weiteren bevorzugten Ausführungsform umfasst die Kopplungsvorrichtung ein Zwischenelement, bevorzugt ein Zwischenrad, zur Kraftübertragung, ein Ausrichtungselement, welches das Zwischenelement, bevorzugt Zwischenrad, zu dem Kraftaufnahmeelement des Lagerbands so ausrichtet, dass eine Kraftübertragung stattfinden kann. Weiterhin umfasst die Kopplungsvorrichtung ein Verbindungselement, auch als Verriegelungselement bezeichnet, welche das Bedienband mit dem Lagerband verbindet und so eine gerichtete Kraftübertragung erlaubt. Vorzugsweise werden das Zwischenelement, bevorzugt das Zwischenrad, das Ausrichtungselement und das Verbindungselement von nur einer Antriebseinheit, bevorzugt einem Motor angetrieben.

Vorzugsweise umfasst das Bediengerät wenigstens zwei parallel zueinander angeordnete Kopplungsvorrichtungen, die das Bedienband mit dem Lagerband lösbar verbinden, eine gerichtete Kraftübertragung ermöglichen und eine Ausrichtung erlauben. Während das Bediengerät über die Kopplungsvorrichtung mit dem Lagerband verbunden ist, ist eine Positionsveränderung des Bediengeräts nicht möglich.

Gemäß einer weiteren bevorzugten Ausführungsform erfolgt die Kopplung kontaktlos. In dieser Ausführungsform umfasst die Kopplungsvorrichtung vorzugsweise eine magnetische Kraftübertragungsvorrichtung zum Übertragen von Rotationskräften von dem Bedienband auf das Lagerband, um das Bedienband mit dem Lagerband kontaktlos zu koppeln.

Nach einer bevorzugten Ausführungsform weist die Kopplungsvorrichtung mindestens eine Antriebseinheit auf, die eingerichtet ist, mindestens ein mit dem Bediengerät gekoppeltes Lagerband anzutreiben. Vorzugsweise wird die gesamte Kopplungsvorrichtung von nur einer Antriebseinheit angetrieben.

Gemäß einer weiteren bevorzugten Ausführungsform werden das mindestens eine Bedienband und die Kopplungsvorrichtung von nur einer Antriebseinheit, bevorzugt einem Motor, angetrieben.

Vorzugsweise umfasst die Antriebseinheit einen Motor zum Antreiben des Bedienbandes.

Vorzugsweise ist die Antriebseinheit eingerichtet, einzelne Abschnitte des Bedienbandes unabhängig voneinander anzutreiben.

Vorzugsweise umfasst jede Kopplungsvorrichtung wenigstens einen Sensor, auch als Kopplungssensor bezeichnet, der den Kopplungszustand erfasst und überwacht. Dieser wenigstens eine Kopplungssensor ist ein akustischer, magnetischer, induktiver, kapazitiver, resistiver, mechanischer, elektrischer, thermoelektrischer, piezoelektrischer, elektronischer und/oder optischer Sensor.

Gemäß einer weiteren bevorzugten Ausführungsform umfasst die Kopplungsvorrichtung wenigstens zwei Sensoren.

Nach einer bevorzugten Ausführungsform weist das Bediengerät eine Lagervorrichtung auf, die eingerichtet ist, das Bedienband zu lagern und horizontal und/oder vertikal zu bewegen.

Alle Freiheitsgrade des Bediengeräts haben eine Nullposition.

Vorzugsweise umfasst das Bediengerät einen Lagerrahmen und/oder einen Lagerholm, an dem die Lagervorrichtung gelagert ist. Weiter vorzugsweise weist der Lagerrahmen und/oder der Lagerholm eine Führungsschiene auf, an der die Lagervorrichtung horizontal und/oder vertikal bewegt werden kann.

Durch die vertikale Bewegbarkeit des Bedienbandes kann das Bedienband vertikal zu dem Lagerband ausgerichtet werden.

Zur Bestimmung der vertikalen Position des Bedienbandes weist das Bediengerät einen Sensor auf. Vorzugsweise handelt es sich hierbei um einen akustischen, magnetischen, induktiven, kapazitiven, resistiven, mechanischen, elektrischen, thermoelektrischen, piezoelektrischen, optischen und/oder elektronischen Sensor, bevorzugter um einen mechanischen, elektrischen und/oder elektronischen Sensor. Zur Positionsbestimmung kann das Bedienband in vertikaler Ebene eine Nullposition einnehmen.

Durch die horizontale Bewegbarkeit des Bedienbandes, kann das Bedienband einen sogenannten Initialhub durchführen, wobei das Bedienband in einer horizontalen Ebene auf das Lagerband zu bewegt wird.

Zur Bestimmung der horizontalen Position des Bedienbandes weist das Bediengerät einen Sensor auf. Vorzugsweise handelt es sich hierbei um einen akustischen, magnetischen, induktiven, kapazitiven, resistiven, mechanischen, elektrischen, thermoelektrischen, piezoelektrischen, elektrischen und/oder elektronischen Sensor, bevorzugter um einen elektrischen und/oder elektronischen Sensor. Zur Positionsbestimmung kann das Bedienband in horizontaler Ebene eine Nullposition einnehmen.

Vorzugsweise umfasst die Lagervorrichtung eine Antriebseinheit, bevorzugt einen Motor, pro Bearbeitungsband, um die Bewegbarkeit des Bedienbandes in der Lagervorrichtung zu gewährleisten. Sofern die Lagervorrichtung eine Mehrzahl, bevorzugt zwei Bedienbänder umfasst, so umfasst die Lagervorrichtung auch eine Mehrzahl an Antriebseinheiten, bevorzugt zwei Antriebseinheiten, vorzugsweise zwei Motoren.

Nach einer bevorzugten Ausführungsform ist die Lagervorrichtung eingerichtet, das Bedienband gegen die Horizontale zu schwenken. Der maximale Schwenkwinkel, a, beträgt 15° aus der horizontalen Ebene; dies bedeutet, das Bedienband weist in beide Richtungen einen Schwenkwinkel von +15° bis -15° auf. Vorzugsweise beträgt der Schwenkwinkel 8° oder weniger. Der Schwenkwinkel kann stufenlos eingestellt werden. Zur Bestimmung des Neigungswinkels des Bedienbandes weist das Bediengerät einen Sensor auf. Vorzugsweise handelt es sich hierbei um einen mechanischen, induktiven, elektrischen und/oder elektronischen Sensor. Zur Positionsbestimmung kann das Bedienband eine Nullposition einnehmen.

Eine Kopplung zwischen Bedienband und einem geneigten Lagerband ist hierdurch möglich. Das Bedienband kann durch Schwenken in den gleichen Winkel wie das geneigte Lagerband vor dem eigentlichen Kopplungsvorgang auf das Lagerband ausgerichtet werden.

Nach einer bevorzugten Ausführungsform weist das Bediengerät einen Lagerrahmen auf, an dem die Lagervorrichtung gelagert ist.

Der Lagerrahmen bietet dem Bediengerät eine strukturelle Integrität und legt den Bewegungsraum des Bedienbandes fest.

Gemäß der Erfindung weist das Bediengerät eine Reinigungsvorrichtung auf, die eingerichtet ist, ein angekoppeltes Lagerband zu reinigen. Vorzugsweise weist die Reinigungsvorrichtung wenigstens ein mechanisches Reinigungselement, wenigstens eine Saugvorrichtung und/oder wenigstens eine Desinfektionsvorrichtung auf. Vorzugsweise ist die mechanische Reinigungsvorrichtung eine Bürste. Die Saugvorrichtung ist vorzugsweise ein Staubsauger oder ein Nass-Trockensauger.

In einer bevorzugten Ausführungsform weist das Bediengerät eine Bürste, eine Desinfektionsvorrichtung und eine Saugvorrichtung auf.

Vorzugweise ist die Saugvorrichtung so ausgestaltet, dass sie sowohl feste Partikel als auch Flüssigkeiten aufnehmen kann, sie ist dann als sogenannter Nass-Trockensauger ausgestaltet. Bevorzugt ist die Reinigungsvorrichtung so angeordnet, dass herabfallende Partikel bei der Produktübergabe an oder vom Bediengerät von der Saugvorrichtung aufgenommen werden können. Auch kann die Saugvorrichtung aufgebrachte Flüssigkeiten wie beispielsweise Desinfektionslösung aufnehmen.

Weiterhin bevorzugt ist die Reinigungsvorrichtung so angeordnet, dass im gekoppelten Zustand Bänder, die nicht Bedienbänder sind, mechanisch beispielsweise mit Hilfe einer Bürste und/oder mittels Aufbringen von Reinigungs- und/oder Desinfektionslösungen gereinigt werden können.

Vorzugsweise ist die Reinigungsvorrichtung unterhalb des Bedienbandes angeordnet.

Vorzugsweise umfasst die Reinigungsvorrichtung wenigstens einen Sensor, den sogenannten Reinigungssensor. Dieser Reinigungssensor ist ein akustischer, magnetischer, induktiver, kapazitiver, resistiver, mechanischer, elektrischer, thermoelektrischer, piezoelektrischer, elektronischer und/oder optischer Sensor. Der Reinigungssensor erfasst und überwacht den Reinigungsvorgang.

In einer weiteren bevorzugten Ausführungsform weist das Bediengerät eine Saugvorrichtung auf. Diese Saugvorrichtung ist hierbei so eingerichtet, dass sie Partikel vom Boden aufsaugen kann. Hierdurch ist eine regelmäßige Reinigung des Bodens im Arbeitsbereich des Bediengeräts möglich. Vorzugweise ist die Saugvorrichtung so ausgestaltet, dass sie sowohl feste Partikel als auch Flüssigkeiten aufnehmen kann, sie ist dann als sogenannter Nass-Trocken-Sauger ausgestaltet.

Gemäß einer weiteren Ausführungsform ist die Reinigungsvorrichtung vorzugsweise in ein Bedienband intergiert, das üblicherweise keine Produkte lagert.

Nach einer bevorzugten Ausführungsform ist das Bediengerät als fahrerloses Transportsystem, FTS, ausgebildet. Vorzugsweise ist eine Bewegung des Bediengeräts durch ein Schienensystem festgelegt.

Das Bediengerät kann sich vorzugsweise innerhalb oder außerhalb der Vorrichtung bewegen.

Im Falle einer Bewegung des Bediengeräts auf einem Schienensystem kann das Schienensystem auf dem Boden und/oder an der Decke verlaufen. Alternativ ist eine Führung des Bediengeräts auch auf einer vorher festgelegten Höhe über dem Boden, insbesondere in einem Bereich von 0cm bis 50cm, bevorzugt von 15cm bis 50cm und bevorzugter von 30 cm bis 50 cm über dem Boden, festgelegt. Auf diese Weise kann der Boden unter dem Bediengerät gereinigt werden, ohne das Bediengerät verfahren zu müssen.

Auf die vorgenannte Weise ist die gesamte aktive Technik zum Transportieren und Austauschen der Produkte zwischen verschiedenen Einheiten der Vorrichtung in dem Bediengerät integriert. Die jeweiligen Einheiten, wie Befülleinheit oder Bearbeitungseinheit, können demnach vergleichsweise weniger komplexe Einheiten sein, die bereits als Standardeinheiten am Markt verfügbar und kostengünstig beschaffbar und/oder austauschbar sind.

Vorzugsweise umfasst die Vorrichtung mehrere Bediengeräte. Sollten die Bediengeräte aus irgendwelchen Gründen kurzzeitig ausfallen, so ist die Vorrichtung auch ohne Bediengerät funktionsfähig, benötigt dazu aber manuelle Arbeitskraft.

Das Bediengerät kann aufgrund des Bedienbandes anstelle, zusätzlich oder ergänzend zu den Produkten auch übliche Bleche, Backpapier, Trennfolien, Silikonauflagen handhaben, auf denen sich die Produkte befinden. Die Produkte können beispielsweise auf diesen zusätzlichen Unterlagen zur Optimierung der Sauberkeit bewegt werden.

Vorzugsweise umfassen die Produkte Lebensmittel, bevorzugt Konserven, Backwaren, Wurstwaren, Fleisch, Obst und/oder Gemüse, weiter vorzugsweise gekühlte, tiefgefrorene, vorgebackene und/oder nicht vorgebackene Lebensmittel, insbesondere Backwaren. Backwaren in roher Form umfassen vorzugsweise gekühlte, tiefgefrorene und/oder vorgebackene Backwaren.

Gemäß einer bevorzugten Ausführungsform ist die Vorrichtung zum Behandeln von Produkten, eine Vorrichtung zum Behandeln von Lebensmitteln, bevorzugt zum Behandeln von Konserven, Backwaren, Wurstwaren, Fleisch, Obst und/oder Gemüse, bevorzugter zum Behandeln von Backwaren.

Vorzugsweise umfasst die Vorrichtung auch eine Kühlvorrichtung, insbesondere eine Tiefkühl-Speichereinheit, die ebenfalls mit Lagerbändern ausgestattet ist. Vorzugsweise umfasst die Kühlvorrichtung Türen. Der Öffnungsgrad der Türen wird bevorzugt mittels wenigstens einem Sensor erfasst und überwacht. Dieser Sensor ist vorzugsweise ein akustischer, magnetischer, induktiver, kapazitiver, resistiver, mechanischer, elektrischer, thermoelektrischer, piezoelektrischer, elektronischer und/oder optischer Sensor.

Vorzugsweise umfasst die Bearbeitungseinheit Türen. Der Öffnungsgrad der Türen wird bevorzugt mittels wenigstens einem Sensor erfasst und überwacht. Dieser Sensor ist vorzugsweise ein akustischer, magnetischer, induktiver, kapazitiver, resistiver, mechanischer, elektrischer, thermoelektrischer, piezoelektrischer, elektronischer und/oder optischer Sensor.

Gemäß einer bevorzugten Ausführungsform ist die Bearbeitungseinheit eine Vorrichtung zum Erhitzen. Vorzugsweise ist die Bearbeitungseinheit ein Ofen, bevorzugter ein Vakuumofen.

Nach einer bevorzugten Ausführungsform umfasst die Vorrichtung mindestens eine Speichereinheit, die mindestens ein Lagerband aufweist und eingerichtet ist, die Produkte zu speichern.

Nach einer bevorzugten Ausführungsform umfasst die Vorrichtung mindestens eine Befülleinheit, die mindestens ein Lagerband aufweist, und eingerichtet ist, die Vorrichtung mit Produkten zu befüllen.

Nach einer bevorzugten Ausführungsform umfasst die Vorrichtung eine Steuervorrichtung, die eingerichtet ist, das Bediengerät selbstlernend zu steuern.

Vorzugsweise ist die Steuervorrichtung eingerichtet, jede Einheit der Vorrichtung selbstlernend zu steuern.

Vorzugsweise ist die Steuervorrichtung als Prozessor ausgebildet.

Vorzugsweise weist die Steuervorrichtung eine machine-learning-Vorrichtung auf, welche eine Steuereinheit der Steuervorrichtung vorzugsweise mit Parametern für die Steuerung versorgt. Die Parameter der machine-learning-Vorrichtung werden basierend auf Lerndaten und Trainingsdaten, vorzugsweise basierend auf Informationen über die Befüllung der Vorrichtung und die Ausgabe der Vorrichtung, selbstlernend angepasst. Die Informationen über die Ausgabe der Vorrichtung umfassen vorzugsweise Sensordaten eines Gewichtssensors an einem Lagerband der Ausgabeeinheit.

Bevorzugt sind die Lagerbänder der Ausgabeeinheit lösbar mit der Ausgabeeinheit verbunden. Hierdurch wird gewährleistet, dass diese einfach getauscht werden können, um sie verschiedenen Ausgabeprodukten anzupassen oder auch zu reinigen.

Aufgrund der selbstlernenden Steuerung kann der durch die Vorrichtung produzierte Ausschuss an Produkten reduziert werden. Ebenso kann Energie eingespart werden, da beispielsweise die Anzahl von Bearbeitungszyklen reduziert werden kann, aber auch die Steuerung der Bearbeitungseinheit oder auch einer Kühleinheit angepasst werden kann. Auf die vorher beschriebene Weise kann eine fast vollautomatische Vorrichtung zum Bearbeiten und Ausgeben von Produkten bereitgestellt werden, was Kosten, insbesondere Personalkosten, spart. Außerdem ist ein hygienischeres Arbeiten möglich, da weniger Personal in Kontakt mit den Produkten kommt.

Gemäß einem Aspekt umfasst die Erfindung ein Verfahren mit den Merkmalen des Anspruchs 9.

Der Schritt des Koppelns des Bedienbandes umfasst verschiedene Einzelschritte. Zuerst wird das Bediengerät vor der Einheit, im vorliegenden Fall der Bearbeitungseinheit, mit der eine Interaktion erfolgen soll, positioniert. Diese Positionierung wird durch eine Antriebseinheit erreicht, wobei die Positionierung durch einen Sensor, den sogenannten Positionssensor, erfasst und überwacht wird.

Im nächsten Schritt wird die Kopplungsvorrichtung auf das entsprechende Lagerband ausgerichtet. Hierbei wird das Kraftübertragungselement auf das Kraftaufnahmeelement des Lagerbandes ausgerichtet. Das Kraftübertragungselement und das Kraftaufnahmeelement werden arretiert, so dass eine Kraftübertragung möglich ist. Gleichzeitig findet eine Verriegelung statt, damit das Bedienband in einer Position zum Lagerband fixiert ist und das Kraftübertragungselement eine gerichtete Kraftübertragung auf das Kraftaufnahmeelement vornehmen kann.

Vorzugsweise handelt es sich bei der Verriegelung um eine formschlüssige oder kraftschlüssige Verbindung.

Die Fixierung hat den Effekt, dass die Kräfte bei der Kraftübertragung gerichtet vom Bediengerät auf das Lagerband übertragen werden. Während der Kraftübertragung wirken Kräfte, die eine Fehlpositionierung der Kopplungsvorrichtung hervorrufen könnten, sofern diese nicht fixiert wäre.

Die einzelnen Funktionen können durch verschiedene Elemente und Vorrichtungen der Kopplungsvorrichtung ausgeführt werden. Es ist aber auch möglich, dass ein einzelnes Element und/oder eine einzelne Vorrichtung mehrere Funktionen der Kopplungsvorrichtung übernimmt.

Die Kraftübertragung findet ohne direkte Kontaktierung der Bänder statt. Hierdurch wird vermieden, dass sich die Bänder gegenseitig verunreinigen, und es ist außerdem möglich, dass sowohl das Band des Bedienbands als auch das Band des Lagerbands aus unterschiedlichen Materialien, die keine ausreichende Kraftübertragung erlauben, bestehen können. Weiterhin wird es vermieden, dass Abrieb durch die Kontaktierung der Bänder entsteht, der die Produkte kontaminieren könnte.

Ebenso ist es durch diese Art der Kopplung möglich Temperaturunterschiede zwischen Bediengerät, das heißt Band des Bedienbands, und Band des Lagerbands auszugleichen und trotzdem eine zuverlässige Kopplung zu gewährleisten. Auch können Varianzen zwischen Kopplungsvorrichtung und Verriegelungselement sowie Kraftaufnahmeelement besser ausgeglichen werden.

Weiterhin bevorzugt wird die Kopplungsvorrichtung von nur einer Antriebseinheit angetrieben. Hierdurch wird verhindert, dass der Kopplungsvorgang nicht synchron abläuft und es zu Fehlversuchen bei der Kopplung kommt.

Vorzugsweise wird das Bediengerät bei Inbetriebnahme in eine Nullposition gefahren. Hierbei wird das Bediengerät sowie das Bedienband in eine Nullposition versetzt.

Ein weiterer Aspekt betrifft ein Bediengerät zum Behandeln von Produkten, wobei das Bediengerät mindestens ein Bedienband und mindestens eine Kopplungsvorrichtung aufweist;
wobei das Bedienband eingerichtet ist, Produkte zu lagern;
wobei die Kopplungsvorrichtung eingerichtet ist, das Bedienband mit einem Lagerband zu koppeln, um Produkte mit dem gekoppelten Lagerband auszutauschen;
wobei die Kopplungsvorrichtung mindestens eine Antriebseinheit aufweist, die eingerichtet ist, mindestens ein mit dem Bediengerät gekoppeltes Lagerband anzutreiben.

Gemäß einer bevorzugten Ausführungsform sind im gekoppelten Zustand das Band des Bedienbands und das Band eines angekoppelten Lagerbands ohne Kontakt; und/oder
ist die Kopplungsvorrichtung (30) eingerichtet, um das Bedienband (21) mit dem Lagerband (41, 51) mechanisch, vorzugsweise mit Hilfe eines Zwischenelements, bevorzugt eines Zwischenrads (31), oder kontaktlos zu koppeln; und/oder
weist die Kopplungsvorrichtung nur eine Antriebseinheit auf; und/oder ist das Bedienband (21) mehrteilig, vorzugsweise zweiteilig, ausgebildet; und/oder weist das Bediengerät (20) eine Lagervorrichtung (22) auf, die eingerichtet ist, das Bedienband (21) zu lagern und horizontal und/oder vertikal zu bewegen.

Ein weiterer Aspekt betrifft die Verwendung eines Bediengeräts zum Behandeln von Produkten, bevorzugt zum Behandeln von Lebensmitteln, bevorzugter zum Behandeln von Backwaren, Wurstwaren, Fleisch, Obst und/oder Gemüse.

Weitere Vorteile der Erfindung ergeben sich aus der nachfolgenden Beschreibung von bevorzugten Ausführungsbeispielen, die jedoch in keiner Weise als einschränkend zu verstehen sind.

Ein Ausführungsbeispiel wird im Folgenden anhand der beigefügten Zeichnungen näher erläutert. Darin zeigt:
- Fig. 1: schematische Obersicht einer Vorrichtung zum Behandeln von Produkten;
- Fig. 2: eine Perspektivansicht eines Bediengeräts nach einer ersten Ausführungsform;
- Fig. 2a: eine Frontansicht des Bediengeräts nach der ersten Ausführungsform;
- Fig. 2b: eine Untersicht des Bediengeräts nach der ersten Ausführungsform;
- Fig. 2c: eine vergrößerte Ansicht einer Kopplungsvorrichtung des Bediengeräts nach der ersten Ausführungsform;
- Fig. 3: eine Perspektivansicht einer gekoppelten Kopplungsvorrichtung des Bediengeräts nach der ersten Ausführungsform;
- Fig. 4: eine Perspektivansicht eines Bediengeräts nach einer zweiten Ausführungsform;
- Fig. 4a: eine Frontansicht des Bediengeräts nach der zweiten Ausführungsform;
- Fig. 4b: eine Untersicht des Bediengeräts nach der zweiten Ausführungsform;
- Fig. 4c: eine vergrößerte Ansicht einer Kopplungsvorrichtung des Bediengeräts nach der zweiten Ausführungsform; und
- Fig. 5: eine Perspektivansicht einer gekoppelten Kopplungsvorrichtung des Bediengeräts nach der zweiten Ausführungsform.

Gleiche Bezugszeichen, wie sie in verschiedenen Ausführungsformen verwendet werden, bezeichnen jeweils gleiche Elemente der Ausführungsformen.

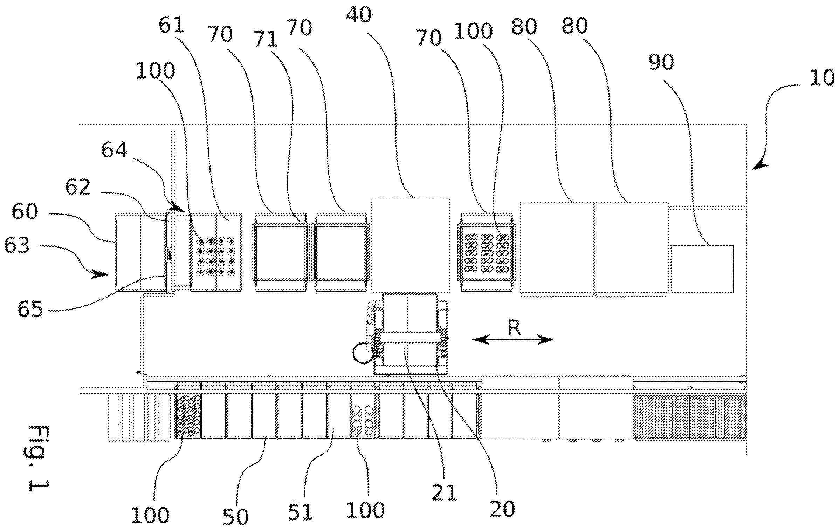

Fig.1 zeigt eine schematische Obersicht einer Vorrichtung 10 zum Behandeln von Produkten. Die Vorrichtung ist in diesem Ausführungsbeispiel als Backautomat 10 ausgebildet, der als Produkte Backwaren 100 behandelt. Der Backautomat umfasst ein Bediengerät 20, eine Bearbeitungseinheit in Form eines Backofens 40, mehrere Ausgabeeinheiten 50, eine Befülleinheit 60 und mehrere Speichereinheiten 70. Zusätzlich umfasst der Backautomat 10 eine Tiefkühl-Speichereinheit 80 und eine Ausschussaufnahme 90. Der Backautomat 10, insbesondere das Bediengerät 20, wird durch eine Steuervorrichtung (nicht gezeigt) gesteuert.

Die einzelnen Einheiten 40, 50, 60, 70, 80 weisen vorzugsweise jeweils mehrere Lagerbänder 41, 51, 61, 71, 81 auf, die weiter vorzugsweise horizontal übereinander angeordnet sind.

Der Backautomat 10 ist über die Befülleinheit 60 befüllbar. Üblicherweise wird diese Aufgabe von einem Bediener übernommen. Die Befülleinheit 60 weist mindestens ein Lagerband 61 auf, auf dem die Backwaren 100 in roher Form zu platzieren sind. Damit der Bediener weiß welche Art von Backware 100 in die Befülleinheit 60 eingegeben werden soll, umfasst die Befülleinheit 60 eine Anzeigevorrichtung 62, insbesondere einen Monitor, die dem Bediener anzeigt welche Art von Backware 100 auf das Lagerband 61 der Befülleinheit 60 aufgelegt werden soll. Vorzugsweise weist die Befülleinheit 60 einen Befüllbereich 63 und einen Lagerbereich 64 auf. Zum Befüllen der Befülleinheit 60 ist das Lagerband 61 in dem Befüllbereich 63 angeordnet. Der Befüllbereich 63 ist derart an einer Außenseite des Backautomaten 10 zugänglich, dass der Bediener die Backwaren 100 auf dem darin angeordneten Lagerband 61 ablegen kann. Nachdem das Lagerband 61 befüllt wurde, verfährt das Lagerband 61 von dem Befüllbereich 63 in den Lagerbereich 64, der innerhalb des Backautomaten 10 angeordnet ist und für den Bediener nicht zugänglich ist. Der Bediener hat während des reibungslosen Ablaufs des Backautomaten somit ausschließlich Zugriff auf den Befüllbereich 63 der Befülleinheit 60.

Damit der Bediener weiß, wo genau er die Backwaren 100 auf dem Lagerband 61 ablegen soll, weist die Befülleinheit 60 vorzugsweise einen Projektor 65 auf, der die Stellen auf dem Lagerband 61 projizierend markiert, auf die der Bediener die Backwaren 100 ablegen soll.

Für einen effizienten Befüllablauf erhält der Bediener vorzugsweise ein Signal zur Befüllung des Backautomaten 10. Durch die Steuervorrichtung des Backautomaten 10 wird dem Bediener über die Anzeigevorrichtung 62 die Art der zu befüllenden Backware 100 angezeigt. Der Bediener holt die entsprechenden Backwaren, die noch in roher Form vorliegen, aus einem Produktlager. Über einen Bedienerimpuls, insbesondere eine Eingabeeinheit, wie einen Knopf, an dem Backautomaten 10 erfolgt eine Freigabe zur Befüllung. Vorzugsweise wird dies durch einen Signalton bestätigt. Der Bediener kann nun das Lagerband 61 von dem Lagerbereich 64 aus einer eingefahrenen Position in den Befüllbereich 63 in eine ausgefahrene Position bewegen. Wenn das Lagerband 61 die ausgefahrene Position erreicht hat, wird über den Projektor 65 ein Auflegeraster auf das Lagerband 61 projiziert oder an der Anzeigevorrichtung 62 angezeigt. Nachdem der Bediener das Lagerband 61 und somit die Befülleinheit 60 befüllt hat, wird die Befüllung quittiert, insbesondere durch ein Abscannen eines Produktcodes von einem Behälter der Backwaren 100 aus dem Produktlager. Nur wenn die Quittierung erfolgt ist, kann der Befüllvorgang abgeschlossen werden, da die Steuerungsvorrichtung ansonsten die Befüllung verweigert.

Nach der Befüllung befinden sich die Backwaren 100 in roher Form auf dem in der eingefahrenen Position befindlichen Lagerband 61 der Befülleinheit 60. Die Steuervorrichtung leitet daraufhin das Bediengerät 20 an, die Backwaren 100 abzuholen, um diese zu dem Backofen 40 zu befördern.

Das Bediengerät 20 weist ein Bedienband 21 auf, auf das die Backwaren 100 von dem Lagerband 61 der Befülleinheit 60 transferiert werden sollen. Das Bediengerät 20 weist eine Fahreinheit 24 auf, die beispielsweise als Fahrgestell mit mehreren Reifen ausgebildet ist, um es dem Bediengerät 20 zu erlauben sich zwischen den einzelnen Einheiten, wie beispielsweise zwischen Befülleinheit 60, Speichereinheit 70, Backofen 40 und/oder Ausgabeeinheit 50 zu bewegen. Das Bediengerät 20 kann dabei als fahrerloses Transportsystem, FTS, ausgebildet sein, wodurch eine maximale Beweglichkeit des Bediengeräts 20 möglich ist. Alternativ ist auch eine festgelegte Beweglichkeit anhand eines Schienensystems möglich. Zum Aufnehmen der Backwaren 100 von dem Lagerband 61 der Befülleinheit 60 fährt das Bediengerät 20 zu der Befülleinheit 60 und positioniert sich derart vor der Befülleinheit 60, dass das Bedienband 21 des Bediengeräts 20 horizontal vor dem Lagerband 61 der Befülleinheit 60 angeordnet ist.

Das Bedienband 21 ist in dem Bediengerät 20 durch eine Lagervorrichtung 22 gelagert. Die Lagervorrichtung 22 bewegt das Bedienband 21 solange in vertikaler Richtung RV, bis das Bedienband 21 horizontal eben zu dem Lagerband 61 angeordnet ist. Um Produkte 100 zwischen dem Lagerband 61 der Befülleinheit 60 und dem Bedienband 21 des Bediengeräts 20 austauschen zu können, müssen das Lagerband 61 der Befülleinheit 60 und das Bedienband 21 des Bediengeräts 20 miteinander gekoppelt werden. Diese Koppelung kann dabei mechanisch oder auch kontaktlos erfolgen. Entscheidend ist lediglich, dass sich sowohl das Lagerband 61 der Befülleinheit 60 und das Bedienband 21 des Bediengeräts 20 mit einer identischen Geschwindigkeit in dieselbe Richtung drehen. Auf diese Weise können die Produkte 100 untereinander ausgetauscht werden. Wie in Fig. 1 zu sehen ist, sind sowohl das Bedienband 21 als auch das Lagerband 61 der Befülleinheit 60 zweiteilig ausgebildet. Jeder der beiden Teile des Lagerbands 61 der Befülleinheit 60 und des Bedienbandes 21 können separat voneinander eine Rotation ausführen.

Zum Koppeln des Lagerbands 61 der Befülleinheit 60 und des Bedienbandes 21 führt das Bediengerät 20, insbesondere die Lagervorrichtung 22 einen sogenannten Initialhub aus, bei dem das Bedienband 21 solange in horizontaler Richtung RH auf das Lagerband 61 der Befülleinheit 60 zu bewegt wird, bis das Bedienband 21 in einer Kopplungsposition ist. In der Kopplungsposition besteht zwischen dem Lagerband 61 der Befülleinheit 60 und dem Bedienband 21 nur noch ein sehr geringer Spalt und eine Kopplungsvorrichtung 30 des Bediengeräts 20 koppelt das Bedienband 21 mit dem Lagerband 61 der Befülleinheit 60. Ist das Bedienband 21 mit dem Lagerband 61 der Befülleinheit 60 gekoppelt, treibt eine dafür vorgesehene Antriebseinheit 23, vorzugsweise in Form eines Motors, das Bedienband 21 derart an, dass es sich von der Befülleinheit 60 wegdreht. Durch die Kopplung des Bedienbandes 21 mit dem Lagerband 61 der Befülleinheit 60 wird die Bewegung des Bedienbandes 21 derart auf das Lagerband 61 der Befülleinheit 60 übertragen, dass sich dieses in dieselbe Richtung, also in Richtung des Bediengeräts 20 dreht. Auf diese Weise werden die Produkte 100 von dem Lagerband 61 der Befülleinheit 60 auf das Bedienband 21 übertragen. Eine genaue Ausführung zu der Kopplung ist in den im Anschluss beschriebenen Figuren beschrieben.

Auf dieselbe Weise kann sich das Bediengerät zwischen den einzelnen Einheiten, Befülleinheit 60, Speichereinheit 70, Backofen 40, Ausgabeeinheit 50 und/oder TK-Speichereinheit 80 bewegen und Produkte 100 aufnehmen oder abgeben.

Nach der Aufnahme der zu verarbeitenden Produkte 100 von der Befülleinheit 60 transportiert das Bediengerät 20 die Produkte 100 entweder zu der Speichereinheit 70 oder zu dem Backofen 40. Über die jeweiligen Lagerbänder 41, 71 kann das Bediengerät 20 die Produkte 100 entweder entnehmen oder die jeweiligen Einheiten mit Produkten befüllen. Die jeweilige Aktion wird von der Steuervorrichtung gesteuert. Nach dem Backen der Produkte 100 in dem Backofen 40, werden die fertigen Produkte 100 von dem Bediengerät 20 abgeholt und zu der Ausgabeeinheit 50 transportiert.

Die Ausgabeeinheit 50 weist auf einer Außenseite des Backautomaten 10 eine oder mehrere Schütt- oder Stückgutausgaben auf. Durch diese Ausgaben können Kunden die fertigen Produkte 100 aus dem Backautomaten 10 entnehmen. Die Schütt- oder Stückgutausgaben können dabei verschiedene Ausgestaltungen aufweisen, wie beispielsweise Klappen, jeweils für nur ein Produkt oder eine ganze Ebene oder Einzelentnahmemöglichkeiten, die vorzugsweise vandalismussicher einen 24-Stunden Betrieb ermöglichen.

Üblicherweise weist die Ausgabeeinheit 50 ein Lagerband 51 auf, das schräg angeordnet ist, da auf diese Weise eine bessere Präsentation und Auswahlmöglichkeit für die Kunden möglich ist. In diesem Fall wird zum Koppeln des Bedienbandes 21 die Lagervorrichtung 22 das Bedienband 21 nachdem es vertikal zu dem Lagerband 51 der Ausgabeeinheit 50 ausgerichtet wurde zusätzlich zu der horizontalen Verschiebung des Initialhubs auch entsprechend des Lagerbandes 51 der Ausgabeeinheit 51 geschwenkt und damit schräg gestellt, um in die Kopplungsposition zu gelangen. Das Kopplungsverfahren entspricht hierbei grundsätzlich dem beschriebenen Kopplungsverfahren zwischen Bedienband 21 und dem jeweiligen Lagerband 41, 51, 61, 71, 81.

Zusätzlich können durch die beschriebene Funktion des Bediengeräts 20 ausschüssige Produkte 100 von der Ausgabeeinheit 50 zu der Ausschussaufnahme 90 transportiert werden, wo sie zur weiteren Verwertung gesammelt werden können. Produkte 100 werden vorzugsweise von der Steuervorrichtung als ausschüssig markiert und aus der Ausgabeeinheit 50 entsorgt, wenn die Produkte 100 eine vorher festgelegte Ausschusszeit in der Ausgabeeinheit 50 verbracht haben und nicht verkauft werden konnten. Die Verweilzeit, die einzelne Produkte oder Produktchargen in der Ausgabeeinheit 50 verbracht haben, wird von der Steuervorrichtung überwacht. Die Steuervorrichtung vergleicht diese Zeit mit einer produktabhängigen Ausschusszeit. Üblicherweise liegt die Ausschusszeit bei drei bis vier Stunden, kann aber beispielsweise bei Edelprodukten, wie Croissants, auch lediglich zwei Stunden betragen. Überschreitet die Verweilzeit eines Produkts 100 die entsprechende Ausschusszeit, wird das jeweilige Produkt als Ausschuss markiert und von dem Bediengerät 20 zur Ausschussaufnahme 90 transportiert und abgegeben.

Die Steuervorrichtung überwacht und steuert den gesamten Backautomaten 10. Über verschiedene Sensoren, wie Gewichtssensoren an dem Bedienband 21 und/oder den Lagerbändern 41, 51, 61, 71, 81, sowie Informationen von dem Benutzer oder den einzelnen Einheiten 40, 50, 60, 70, 80 wird die Steuervorrichtung mit Echtzeitdaten versorgt. Zusätzlich weist die Steuervorrichtung vorzugsweise eine machine-learning-Vorrichtung auf, durch welche die Steuervorrichtung optimiert wird. Auf diese Weise kann die Steuervorrichtung die Befüllung des Backautomaten 10 derart steuern, dass möglichst wenig Ausschuss produziert wird. Entsprechend des Kaufverhaltens der Kunden, also entsprechend des produzierten Ausschusses einzelner Arten von Produkten 100 passt die machine-learning-Vorrichtung die Steuerung der Steuervorrichtung derart an, dass entsprechend der Art des Produktes 100, der Uhrzeit, des Standortes und/oder des Datums die Befüllung des Backautomaten 10 angepasst wird. Beispielsweise verkaufen sich Croissants besonders schleppend zu späterer Uhrzeit. Demnach wird die Steuervorrichtung nachmittags weniger Croissants backen und nachfüllen lassen als vormittags, um Ausschuss zu vermeiden.

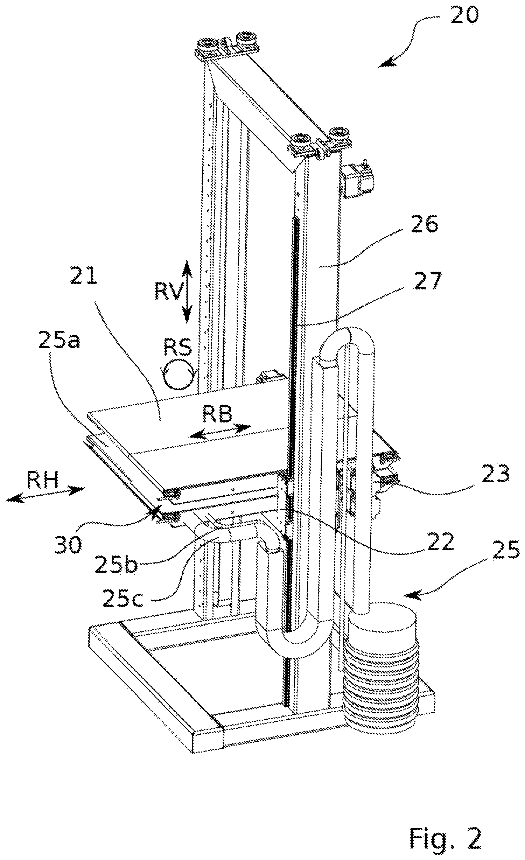

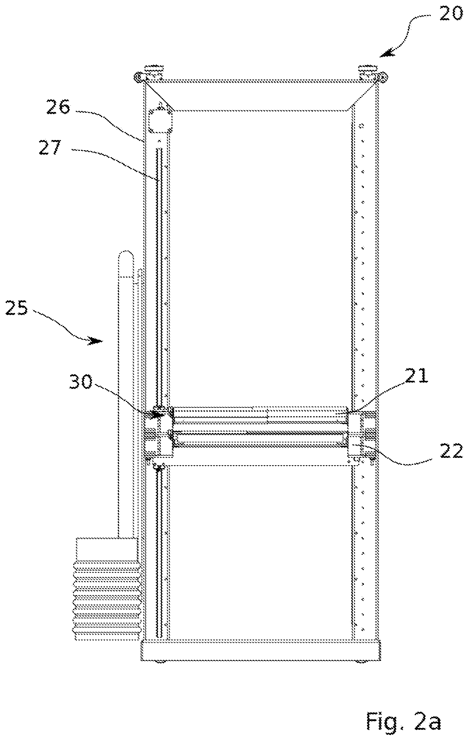

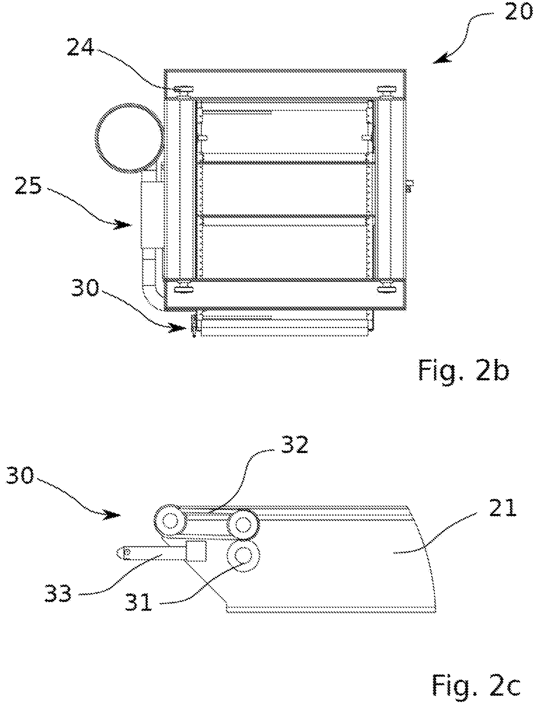

Fig. 2, 2a und 2b zeigen ein Bediengerät 20 nach einer ersten Ausführungsform. Das Bediengerät 20 umfasst ein Bedienband 21, eine Lagervorrichtung 22, eine Antriebseinheit 23, eine Fahreinheit 24, eine Reinigungsvorrichtung 25, einen Lagerrahmen 26, eine Führungsschiene 27 und eine Kopplungsvorrichtung 30. Der Lagerrahmen 26 ist in dieser Ausführungsform als geschlossener Rahmen ausgebildet. Es sind allerdings auch weitere Ausführungsformen denkbar. Beispielsweise kann der Lagerrahmen 26 auch als einzelner Holm ausgestaltet sein, solange er genügend Integrität aufweist, die Lagervorrichtung 22 und das darin gelagerte Bedienband 21 zu lagern. Der Lagerrahmen 26 umfasst die Führungsschiene 27, die in vertikaler Richtung an dem Lagerrahmen 26 angeordnet ist. Auf der Führungsschiene 27 ist die Lagervorrichtung 22 angeordnet, die wiederum das Bedienband 21 aufnimmt.

Die Lagervorrichtung 22 ist vertikal entlang der Führungsschiene 27 verfahrbar. Auf diese Weise kann die Lagervorrichtung 22 das darin gelagerte Bedienband 21 in die vertikale Richtung RV bewegen. Dies wird benötigt, um das Bedienband 21 horizontal zu einem Lagerband 41, 51, 61, 71, 81 auszurichten. Zusätzlich ermöglicht die Lagervorrichtung 22 es dem Bedienband 21 in horizontale Richtung RH bewegt zu werden. Diese Funktion wird als der sogenannte Initialhub bezeichnet. Außerdem kann das Bedienband 21 um die Lagervorrichtung 22 in eine Schwenkrichtung RS verschwenkt werden. Diese Funktion ist besonders wichtig für die Befüllung und Entnahme von Produkten 100 aus schrägen Lagerbändern 51 wie bei der Ausgabeeinheit 50. Gerade bei langen Backwaren, wie Baguettes, ist eine schräge Koppelung des Bedienbands 21 mit dem Lagerband 51 wichtig.

Das Bedienband 21 ist durch die Antriebseinheit 23 in eine Bedienbandrichtung RB antreibbar. Je nachdem ob Produkte auf das Bedienband 21 geladen werden sollen oder von dem Bedienband 21 entnommen werden sollen, kann das Bedienband 21 in eine der beiden Bedienbandrichtungen RB angetrieben werden. Wie in Fig. 2, 2a und 2b gezeigt ist, ist das Bedienband 21 zweitteilig ausgebildet, sodass die jeweilige Hälfte des Bedienbandes 21 unabhängig von der anderen Hälfte des Bedienbandes 21 angetrieben werden kann.

Die Reinigungsvorrichtung 25 umfasst eine Saugvorrichtung, hier einen Staubsauger 25c, und/oder eine Desinfektionsvorrichtung 25b, die seitlich an dem Lagerrahmen 26 angeordnet ist und zu einem Ende eines Reinigungsbedienbandes 25a geführt wird, das ähnlich dem Bedienband 25 ausgebildet ist. Zusätzlich weist das Reinigungsbedienband 25a Zugänge für die Desinfektionsvorrichtung 25b und den Staubsauger 25c an einem Ende auf. An einer Vorderkante des Reinigungsbedienbandes 25a kann auch eine Auffangvorrichtung zum Aufnehmen von Produktresten vorgesehen sein. Durch das Koppeln des Reinigungsbedienbandes 25a mit einem Lagerband 41, 51, 61, 71, 81 kann das jeweilige Lagerband 41, 51, 61, 71, 81 über seine gesamte Lagerfläche gereinigt werden. Vorzugsweise steuert die Steuervorrichtung die Reinigungsvorrichtung 25 derart, dass in einer Zeit, in der besonders wenige Produkte nachgefragt werden, die Reinigung durchgeführt wird, insbesondere in der Nacht.

Fig. 2c zeigt eine Vergrößerung der Kopplungsvorrichtung 30. Die Kopplungsvorrichtung 30 ist an einem Ende des Bedienbandes 21 vorgesehen und umfasst ein Zwischenrad 31, ein Kontaktrad 32 und ein Verbindungselement 33. Ein direktes Kontaktieren des Bedienbandes 21 mit einem Lagerband 41, 51, 61, 71, 81 würde nicht den gewünschten Zweck erfüllen, dass sich das Bedienband 21 und das Lagerband 41, 51, 61, 71, 81 in dieselbe Bandrichtung RB drehen, um Produkte 100 auszutauschen. Deshalb umfasst die Kopplungsvorrichtung 30 ein Zwischenrad 31, das mit dem Bedienband 21 verbunden ist und sich aufgrund des direkten Kontakts entgegen der Bandrichtung RB dreht. Das Zwischenrad 31 treibt das Kontaktrad 32 in genau diese der Bandrichtung RB entgegengesetzten Richtung an. Wenn das Kontaktrad 32 nun Kontakt zu dem Lagerband 41, 51, 61, 71, 81 aufbaut, wird die Bewegung des Kontaktrads 32 auf das Lagerband 41, 51, 61, 71, 81 übertragen, welches sich somit in Bandrichtung RB und damit entgegengesetzt zu dem Kontaktrad 32 bewegt. Das Verbindungselement 33 unterstützt die Koppelung des Bedienbandes 21 mit dem Lagerband 41, 51, 61, 71, 81 und dient vor allem als Orientierungshilfe und/oder Abstandshilfe.

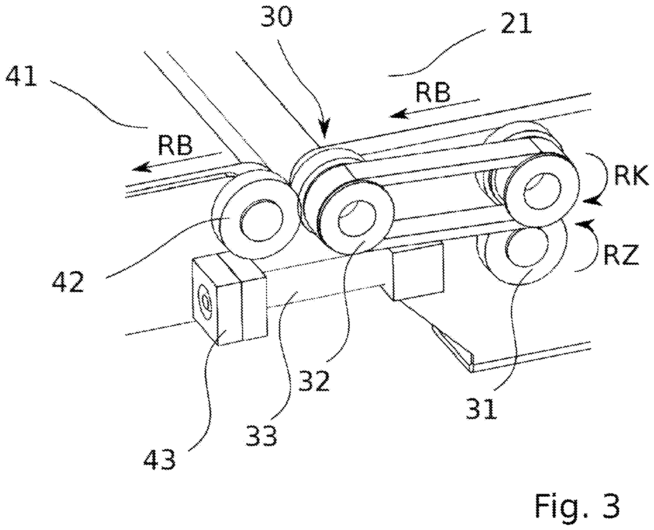

Fig. 3 zeigt eine Kopplung des Bedienbandes 21 mit einem Lagerband 41 eines Backofens 40, das hier lediglich als Beispiel herangezogen wird. In diesem Beispiel bewegt sich das Bedienband 21 in die Bedienrichtung RB zu dem Lagerband 41 hin, um Produkte 100 von dem Bedienband 21 auf das Lagerband 41 zu transportieren. Würde man das Bedienband 21 direkt mit dem Lagerband 41 verbinden, um die Bewegung des Bedienbandes 21 direkt auf das Lagerband 41 zu übertragen, so würde sich das Lagerband 41 entgegen der Bedienrichtung RB bewegen. Ein Austausch von Produkten 100 zwischen dem Bedienband 21 und dem Lagerband 41 wäre somit nicht möglich. Deshalb ist das Zwischenrad 31 vorgesehen, das sich entsprechend des Bedienbandes 21 in die Zwischenradrichtung RZ dreht. Die Bewegung des Zwischenrads 31 in die Zwischenradrichtung RZ wird auf das Kontaktrad 32 übertragen. Hierbei findet die beschriebene Richtungsumkehr statt, sodass sich das Kontaktrad 32 in einer Kontaktradrichtung RK dreht. Das Kontaktrad 32 kontaktiert nun ein weiteres Kontaktrad 42 des Lagerbands 41, wodurch die Bewegung des Kontaktrads 32 der Kopplungsvorrichtung 30 auf das Kontaktrad 42 des Lagerbands 41 überträgt. Auch hier findet eine Richtungsumkehr statt, sodass sich das Lagerband 41 nun in die Bedienrichtung RB bewegt und Produkte 100 von dem Bedienband 21 auf das Lagerband 41 übertragen werden können. Zusätzlich wird zum Koppeln das Verbindungselement 33 der Kopplungsvorrichtung 30 in ein Verbindungselement 43 des Lagerbandes 41 eingeführt. Auf diese Weise kann ein Mindestabstand des Lagerbandes 41 zu dem Bedienband 21 und deren Ausrichtung zueinander sichergestellt werden. Wie in Fig. 3 gezeigt sind das Bedienband (21) und das Lagerband (41) durch die Kopplung mittels der Kopplungsvorrichtung (30) zueinander ausgerichtet, so dass das Kraftübertragungselement, Kontaktrad (32), und das Kraftaufnahmeelement, Kontaktrad (42), miteinander in Eingriff stehen und arretiert sind. Die Kontakträder können auch als Zahnräder, hier nicht gezeigt, ausgestaltet sein. Durch das Eingreifen von Verbindungselement (33) in Verbindungselement (43) wird die Kopplungsvorrichtung verriegelt und es wird neben der Fixierung der Position des Bedienbandes (21) zum Lagerband (41) auch die gerichtete Kraftübertragung vom Bedienband (21) auf das Lagerband (41) gewährleistet. Es ist auch gezeigt, dass sich Bedienband (21) und Lagerband (41) nicht kontaktieren.

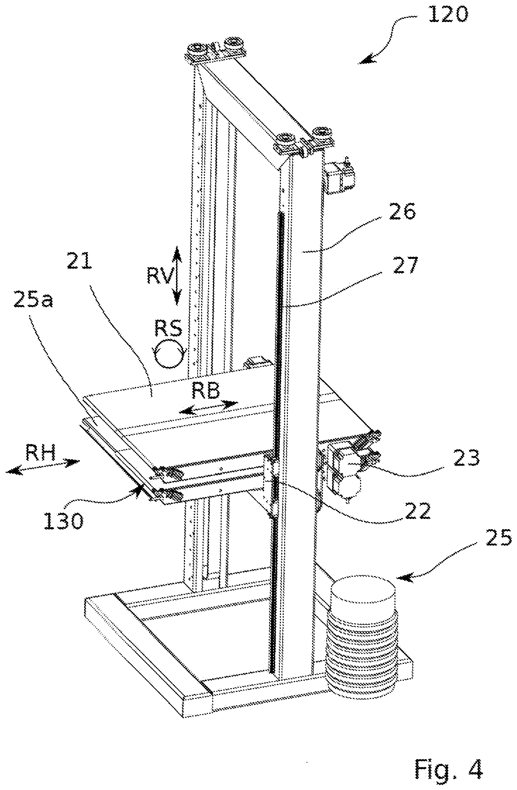

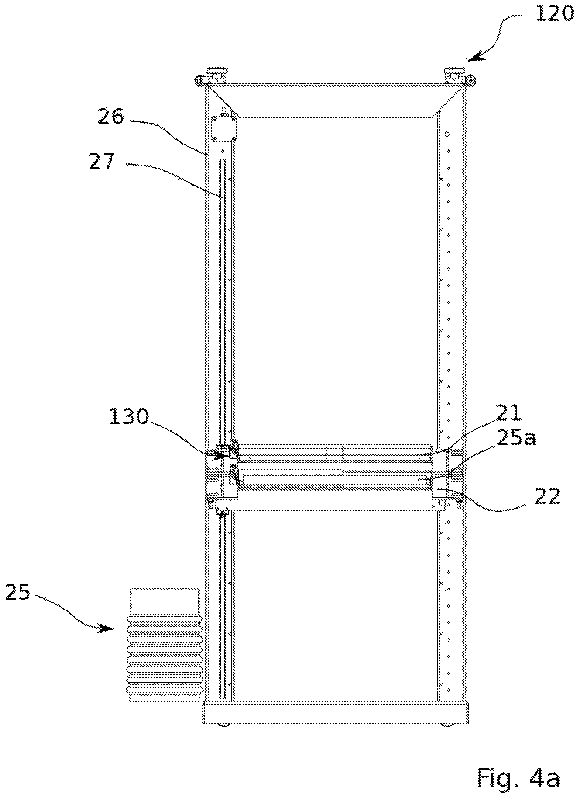

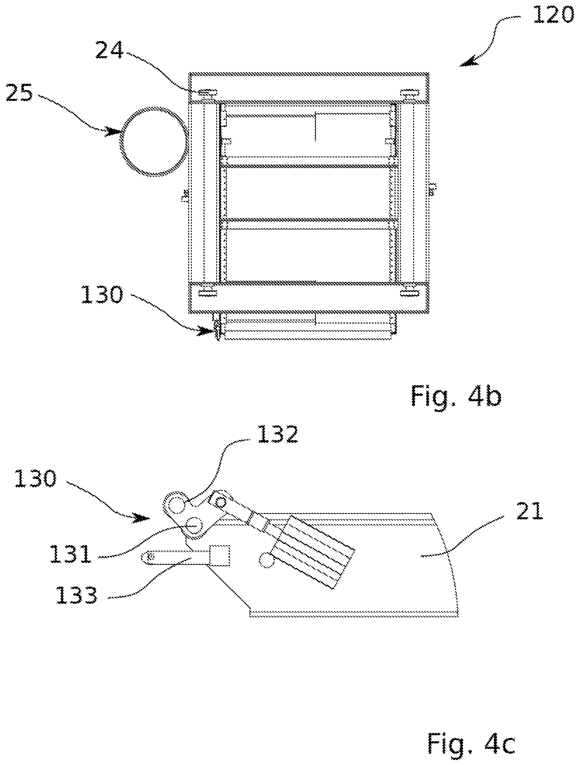

Fig. 4, 4a und 4b zeigen ein Bediengerät 120 nach einer zweiten Ausführungsform. Das Bediengerät 120 der zweiten Ausführungsform unterscheidet sich von dem Bediengerät 20 der ersten Ausführungsform insbesondere durch eine von der Kopplungsvorrichtung 30 der ersten Ausführungsform unterschiedliche Koppelungseinheit 130 der zweiten Ausführungsform.

Fig. 4c zeigt eine Vergrößerung der Kopplungsvorrichtung 130. Die Kopplungsvorrichtung 130 ist an einem Ende des Bedienbandes 21 vorgesehen und umfasst ein Zwischenrad 131, ein Kontaktrad 132 und ein Verbindungselement 133. Die Kopplungsvorrichtung 130 seitlich zum Band des Bedienbands 21 angeordnet und kontaktiert das Band des Bedienbands 21 nicht.

Ein direktes Kontaktieren des Bedienbandes 21 mit einem Lagerband 41, 51, 61, 71, 81 würde nicht den gewünschten Zweck erfüllen, dass sich das Bedienband 21 und das Lagerband 41, 51, 61, 71, 81 in dieselbe Bandrichtung RB drehen, um Produkte 100 auszutauschen. Deshalb umfasst die Kopplungsvorrichtung 130 das Zwischenrad 131, das mit dem Bedienband 21 verbunden ist und sich aufgrund des direkten Kontakts entgegen der Bandrichtung RB dreht. Das Zwischenrad 131 treibt das Kontaktrad 132 in genau diese der Bandrichtung RB entgegengesetzte Richtung an. Wenn das Kontaktrad 132 nun Kontakt zu dem Lagerband 41, 51, 61, 71, 81 aufbaut, wird die Bewegung des Kontaktrads 132 auf das Lagerband 41, 51, 61, 71, 81 übertragen, welches sich somit in Bandrichtung RB und damit entgegengesetzt zu dem Kontaktrad 132 bewegt. Das Verbindungselement 133 unterstützt die Koppelung des Bedienbandes 21 mit dem Lagerband 41, 51, 61, 71, 81 und dient vor allem als Orientierungshilfe. Im Gegensatz zu der Kopplungsvorrichtung 30 der ersten Ausführungsform ist das Kontaktrad 132 um das Zwischenrad 131 drehbar gelagert. Zum Koppeln des Bedienbandes 21 mit dem Lagerband 41, 51, 61, 71, 81 wird das ansonsten horizontal zu dem Bedienband 21 gelagerte Kontaktrad 132 derart um das Zwischenrad 131 rotiert, dass das Kontaktrad 132 ein Kontaktrad des entsprechenden Lagerbands 41, 51, 61, 71, 81 kontaktiert.

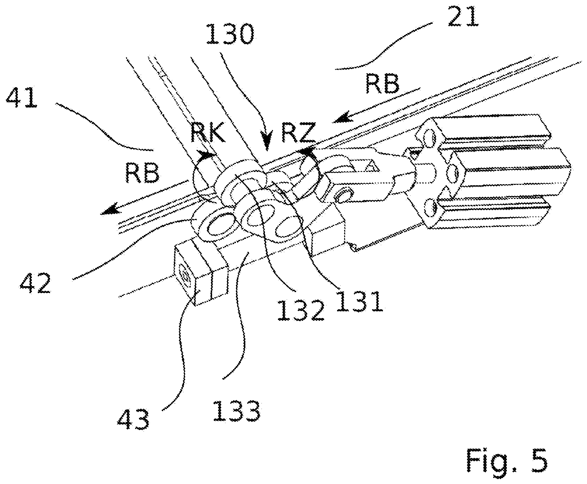

Fig. 5 zeigt eine Kopplung des Bedienbandes 21 mit einem Lagerband 41 eines Backofens 40, das hier lediglich als Beispiel herangezogen wird. In diesem Beispiel bewegt sich das Bedienband 21 in die Bedienrichtung RB zu dem Lagerband 41 hin, um Produkte 100 von dem Bedienband 21 auf das Lagerband 41 zu transportieren. Würde man das Bedienband 21 direkt mit dem Lagerband 41 verbinden, um die Bewegung des Bedienbandes 21 direkt auf das Lagerband 41 zu übertragen, so würde sich das Lagerband 41 entgegen der Bedienrichtung RB bewegen. Ein Austausch von Produkten 100 zwischen dem Bedienband 21 und dem Lagerband 41 wäre somit nicht möglich. Deshalb ist das Zwischenrad 131 vorgesehen, das sich entsprechend des Bedienbandes 21 in die Zwischenradrichtung RZ dreht. Die Bewegung des Zwischenrads 131 in die Zwischenradrichtung RZ wird über auf das Kontaktrad 132 übertragen. Hierbei findet die beschriebene Richtungsumkehr statt, sodass sich das Kontaktrad 132 in einer Kontaktradrichtung RK dreht. Das Kontaktrad 132 kontaktiert nun ein weiteres Kontaktrad 42 des Lagerbands 41, wodurch die Bewegung des Kontaktrads 132 der Kopplungsvorrichtung 30 auf das Kontaktrad 42 des Lagerbands 41 überträgt. Auch hier findet eine Richtungsumkehr statt, sodass sich das Lagerband 41 nun in die Bedienrichtung RB bewegt und Produkte 100 von dem Bedienband 21 auf das Lagerband 41 übertragen werden können. Zusätzlich wird zum Koppeln das Verbindungselement 133 der Kopplungsvorrichtung 130 in ein Verbindungselement 43 des Lagerbandes 41 eingeführt. Auf diese Weise kann ein Mindestabstand des Lagerbandes 41 zu dem Bedienband 21 und deren Ausrichtung zueinander sichergestellt werden.

**Bezugszeichenliste**

| | | | |
|---|---|---|---|
| 10 | Vorrichtung | 60 | Befülleinheit |
| 20 | Bediengerät | 61 | Lagerband |
| 21 | Bedienband | 62 | Anzeigevorrichtung |
| 22 | Lagervorrichtung | 63 | Befüllbereich |
| 23 | Antriebseinheit | 64 | Lagerbereich |
| 24 | Fahreinheit | 65 | Projektor |
| 25 | Reinigungsvorrichtung | 70 | Speichereinheit |
| 25a | Reinigungsbedienband | 71 | Lagerband |
| 25b | Desinfektionsvorrichtung | 80 | Kühl- / Tiefkühl-Speichereinheit |
| 25c | Staubsauger | 81 | Lagerband |
| 26 | Lagerrahmen | 90 | Ausschussaufnahme |
| 27 | Führungsschiene | 100 | Produkt, Backware |
| 30 | Kopplungsvorrichtung | 130 | Kopplungsvorrichtung |
| 31 | Zwischenrad | 131 | Zwischenrad |
| 32 | Kontaktrad | 132 | Kontaktrad |
| 33 | Verbindungselement | 133 | Verbindungselement |
| 40 | Bearbeitungseinheit, Backofen | R | Bewegungsrichtung |
| 41 | Lagerband | RB | Bedienbandrichtung |
| 42 | Kontaktrad | RS | Schwenkrichtung |
| 43 | Verbindungselement | RV | vertikale Richtung |
| 50 | Ausgabeeinheit | RH | horizontale Richtung |
| 51 | Lagerband | RZ | Zwischenradrichtung |
| | | RK | Kontaktradrichtung |

## Patentansprüche

1. Vorrichtung (10) zum Behandeln von Produkten (100), insbesondere Backwaren, umfassend:
mindestens eine Bearbeitungseinheit (40), insbesondere in Form eines Backofens (40) die mindestens ein Lagerband (41) aufweist und eingerichtet ist, die Produkte (100) zu bearbeiten;
mindestens eine Ausgabeeinheit (50), die mindestens ein Lagerband (51) aufweist und eingerichtet ist, die fertigen Produkte (100) an den Kunden auszugeben;
mindestens ein Bediengerät (20), das eingerichtet ist, die Produkte (100) zwischen den Einheiten (40, 50) zu transportieren;
**dadurch gekennzeichnet, dass** das Bediengerät (20) mindestens ein Bedienband (21) und mindesteins eine Kopplungsvorrichtung (30) aufweist;
wobei das Bedienband (21) eingerichtet ist, die Produkte (100) zu lagern;
wobei die Kopplungsvorrichtung (30) eingerichtet ist, das Bedienband (21) mit einem Lagerband (41, 51) zu koppeln, um die Produkte (100) mit dem gekoppelten Lagerband (41, 51) auszutauschen, und
wobei die Kopplungsvorrichtung (30) mindestens eine Antriebseinheit (23) aufweist, die eingerichtet ist, mindestens ein mit dem Bediengerät (20) gekoppeltes Lagerband (41, 51) anzutreiben, wobei das Bediengerät (20) eine Reinigungsvorrichtung (25) aufweist, die eingerichtet ist, ein angekoppeltes Lagerband (41, 51) zu reinigen;
wobei vorzugsweise die Reinigungsvorrichtung (25) einen Staubsauger (25c) und/oder eine Desinfektionsvorrichtung (25b) aufweist.

2. Vorrichtung nach Anspruch 1,
wobei die Kopplungsvorrichtung (30) eingerichtet ist, das Bedienband (21) mit dem Lagerband (41, 51) mechanisch, vorzugsweise mit Hilfe eines Zwischenelements, bevorzugt eines Zwischenrads (31), oder kontaktlos zu koppeln; und/oder
wobei die Kopplungsvorrichtung nur eine Antriebseinheit aufweist; und/oder
wobei im gekoppelten Zustand das Band des Bedienbands und das Band eines angekoppelten Lagerbands ohne Kontakt sind.

3. Vorrichtung nach einem der vorhergehenden Ansprüche,
wobei das Bedienband (21) mehrteilig, vorzugsweise zweiteilig, ausgebildet ist.

4. Vorrichtung nach einem der vorhergehenden Ansprüche,
wobei das Bediengerät (20) eine Lagervorrichtung (22) aufweist, die eingerichtet ist, das Bedienband (21) zu lagern und horizontal und/oder vertikal zu bewegen.

5. Vorrichtung nach Anspruch 4,
wobei die Lagervorrichtung (22) eingerichtet ist, das Bedienband (21) gegen die Horizontale zu schwenken; und/oder
wobei das Bediengerät (20) einen Lagerrahmen (26) aufweist, an dem die Lagervorrichtung (22) gelagert ist.

6. Vorrichtung nach einem der vorhergehenden Ansprüche,
wobei das Bediengerät (20) als fahrerloses Transportsystem, FTS, ausgebildet ist; und/oder
wobei vorzugsweise eine Bewegung des Bediengeräts (20) durch ein Schienensystem festgelegt ist.

7. Vorrichtung nach einem der vorhergehenden Ansprüche, umfassend:
mindestens eine Speichereinheit (70), die mindestens ein Lagerband (71) aufweist und eingerichtet ist, die Produkte (100) zu speichern; und/oder
mindestens eine Befülleinheit (60), die mindestens ein Lagerband (61) aufweist und eingerichtet ist, die Vorrichtung (10) mit Produkten (100) zu befüllen.

8. Vorrichtung nach einem der vorhergehenden Ansprüche, umfassend:
eine Steuervorrichtung, die eingerichtet ist, das Bediengerät (20) selbstlernend zu steuern.

9. Verfahren zum Behandeln von Produkten umfassend den Schritt: Bearbeiten der Produkte durch eine Bearbeitungseinheit (40), insbesondere in Form eines Backofens (40), die mindestens ein Lagerband (41) aufweist;
**gekennzeichnet durch** die Schritte:
Koppeln eines Bedienbandes (21) eines Bediengeräts (20) mit dem Lagerband (41) der Bearbeitungseinheit (40) durch eine Kopplungsvorrichtung (30) des Bediengeräts (20);
wobei das Bediengerät (20) eine Reinigungsvorrichtung (25) aufweist, die eingerichtet ist, ein angekoppeltes Lagerband (41, 51) zu reinigen;
wobei vorzugsweise die Reinigungsvorrichtung (25) einen Staubsauger (25c) und/oder eine Desinfektionsvorrichtung (25b) aufweist;
Austauschen von Produkten (100) zwischen dem Bedienband (21) und dem mit dem Bedienband (21) gekoppelten Lagerband (41) der Bearbeitungseinheit (40);
Transportieren der Produkte (100) von der Bearbeitungseinheit (40) zu einer Ausgabeeinheit (50), die mindestens ein Lagerband (51) aufweist;
Koppeln des Bedienbandes (21) des Bediengeräts (20) mit dem Lagerband (51) der Ausgabeeinheit (50) durch die Kopplungsvorrichtung (30) des Bediengeräts (20);
und
Ausgeben der fertigen Produkte (100) durch die Ausgabeeinheit (50) an den Kunden.

## Claims

1. Device (10) for handling products (100), in particular baked goods, comprising:
at least one processing unit (40), in particular in the form of an oven (40), which has at least one storage belt (41) and is configured to process the products (100);
at least one output unit (50), which has at least one storage belt (51) and is configured to output the finished products (100) to the customer;
at least one operating device (20), which is configured to transport the products (100) between the units (40, 50);
**characterized in that**
the operating device (20) has at least one operating belt (21) and at least one coupling device (30);
wherein the operating belt (21) is configured to store the products (100);
wherein the coupling device (30) is configured to couple the operating belt (21) with a storage belt (41, 51) in order to exchange the products (100) with the coupled storage belt (41, 51), and
wherein the coupling device (30) has at least one drive unit (23), which is configured to drive at least one storage belt (41, 51) coupled with the operating device (20), wherein the operating device (20) has a cleaning device (25) which is configured to clean a coupled storage belt (41, 51);
wherein preferably the cleaning device (25) is a vacuum cleaner (25c) and/or a disinfection device (25b).

2. Device according to claim 1,
wherein the coupling device (30) is configured to couple the operating belt (21) to the storage belt (41, 51) mechanically, preferably with the aid of an intermediate element, preferably an intermediate wheel (31), or in a contactless manner; and/or wherein the coupling device has only one drive unit; and/or wherein in the coupled state, the belt of the operating belt and the belt of a coupled storage belt are without contact.

3. Device according to one of the preceding claims,
wherein the operating belt (21) is formed in multiple parts, preferably in two parts.

4. Device according to one of the preceding claims,
wherein the operating device (20) has a bearing device (22) which is configured to mount the operating belt (21) and move it horizontally and/or vertically.

5. Device according to claim 4,
wherein the bearing device (22) is configured to pivot the operating belt (21) toward the horizontal; and/or
wherein the operating device (20) has a bearing frame (26) on which the bearing device (22) is mounted.

6. Device according to one of the preceding claims,
wherein the operating device (20) is designed as an automated guided vehicle, AGV; and/or
wherein a movement of the operating device (20) is preferably defined by a rail system.

7. Device according to one of the preceding claims, comprising:
at least one storage unit (70) which has at least one storage belt (71) and is configured to store the products (100); and/or
at least one filling unit (60) which has at least one storage belt (61) and is configured to fill the device (10) with products (100) .

8. Device according to one of the preceding claims, comprising:
a control device that is configured to control the operating device (20) in a self-learning manner.

9. Method for treating products comprising the following step:
processing the products by way of a processing unit (40), in particular in the form of an oven (40), which has at least one storage belt (41);
**characterized by** the following steps:
coupling an operating belt (21) of an operating device (20) with the storage belt (41) of the processing unit (40) by way of a coupling device (30) of the operating device (20);
wherein the operating device (20) has a cleaning device (25) which is configured to clean a coupled storage belt (41, 51);
wherein preferably the cleaning device (25) has a vacuum cleaner (25c) and/or a disinfection device (25b);
exchanging products (100) between the operating belt (21) and the storage belt (41) of the processing unit (40) coupled with the operating belt (21);
transporting the products (100) from the processing unit (40) to an output unit (50) which has at least one storage belt (51); coupling the operating belt (21) of the operating device (20) with the storage belt (51) of the output unit (50) by way of the coupling device (30) of the operating device (20);
and
outputting the finished products (100) to the customer by way of the output unit (50).

## Revendications

1. Dispositif (10) de manipulation de produits (100), notamment de produits de boulangerie, comprenant :
au moins une unité de traitement (40), notamment sous la forme d'un four (40), qui comporte au moins une bande de stockage (41) et est conçue pour traiter les produits (100) ;
au moins une unité de délivrance (50) qui comporte au moins une bande de stockage (51) et est conçue pour délivrer les produits finis (100) aux clients ;
au moins un appareil de manœuvre (20) qui est conçu pour transporter les produits (100) entre les unités (40, 50) ;
**caractérisé en ce que**
l'appareil de manœuvre (20) comporte au moins une bande de manœuvre (21) et au moins un dispositif d'accouplement (30) ;
dans lequel la bande de manœuvre (21) est conçue pour stocker les produits (100) ;
dans lequel le dispositif d'accouplement (30) est conçu pour accoupler la bande de manœuvre (21) à une bande de stockage (41, 51) afin d'échanger les produits (100) avec la bande de stockage accouplée (41, 51), et
dans lequel le dispositif d'accouplement (30) comporte au moins une unité d'entraînement (23) qui est conçue pour entraîner au moins une bande de stockage (41, 51) couplée au dispositif de manœuvre (20), dans lequel le dispositif de manœuvre (20) comporte un dispositif de nettoyage (25) qui est conçu pour nettoyer une bande de stockage accouplée (41, 51) ;
dans lequel, de préférence, le dispositif de nettoyage (25) comporte un aspirateur (25c) et/ou un dispositif de désinfection (25b) .

2. Dispositif selon la revendication 1,
dans lequel le dispositif d'accouplement (30) est conçu pour accoupler la bande de manœuvre (21) à la bande de stockage (41, 51) mécaniquement, de préférence à l'aide d'un élément intermédiaire, de manière préférée une roue intermédiaire (31), ou sans contact ; et/ou
dans lequel le dispositif d'accouplement ne comporte qu'une seule unité d'entraînement ; et/ou
dans lequel, dans l'état accouplé, la bande de la bande de manœuvre et la bande d'une bande de stockage accouplée ne sont pas en contact.

3. Dispositif selon une des revendications précédentes,
dans lequel la bande de manœuvre (21) est formée de plusieurs parties, de préférence de deux parties.

4. Dispositif selon une des revendications précédentes,
dans lequel le dispositif de manœuvre (20) comporte un dispositif de stockage (22) qui est conçu pour stocker la bande de manœuvre (21) et pour se déplacer horizontalement et/ou verticalement.

5. Dispositif selon la revendication 4,
dans lequel le dispositif de stockage (22) est conçu pour orienter la bande de manœuvre (21) par rapport à l'horizontale ; et/ou
dans lequel le dispositif de manœuvre (20) comporte un cadre de stockage (26) sur lequel le dispositif de stockage (22) est monté.

6. Dispositif selon une des revendications précédentes,
dans lequel le dispositif de manœuvre (20) est formé comme un système de transport sans conducteur, STSC ; et/ou
dans lequel un mouvement du dispositif de manœuvre (20) est de préférence défini par un système de rail.

7. Dispositif selon une des revendications précédentes, comprenant :
au moins une unité d'entrepôt (70) qui comporte au moins une bande de stockage (71) et est conçue pour entreposer les produits (100) ; et/ou
au moins une unité de remplissage (60) qui comporte au moins une bande de stockage (61) et est conçue pour remplir le dispositif (10) avec des produits (100).

8. Dispositif selon une des revendications précédentes, comprenant :
un dispositif de commande qui est conçu pour commander le dispositif de manœuvre (20) par auto-apprentissage.

9. Procédé de manipulation de produits, comprenant l'étape de :
traitement des produits par une unité de traitement (40), notamment sous la forme d'un four (40), qui comporte au moins une bande de stockage (41) ;
**caractérisé par** les étapes suivantes :
l'accouplement d'une bande de manœuvre (21) d'un dispositif de manœuvre (20) à la bande de stockage (41) de l'unité de traitement (40) par un dispositif d'accouplement (30) du dispositif de manœuvre (20) ;
dans lequel le dispositif de manœuvre (20) comporte un dispositif de nettoyage (25) qui est conçu pour nettoyer une bande de stockage accouplée (41, 51) ;
dans lequel, de préférence, le dispositif de nettoyage (25) comporte un aspirateur (25c) et/ou un dispositif de désinfection (25b) ;
l'échange de produits (100) entre la bande de manœuvre (21) et la bande de stockage (41) accouplée à la bande de manœuvre (21) de l'unité de traitement (40) ;
le transport des produits (100) de l'unité de traitement (40) vers une unité de délivrance (50) qui comporte au moins une bande de stockage (51) ;
l'accouplement de la bande de manœuvre (21) du dispositif de manœuvre (20) à la bande de stockage (51) de l'unité de délivrance (50) par le dispositif d'accouplement (30) du dispositif de manœuvre (20) ;
et
la délivrance des produits finis (100) aux clients par l'unité de délivrance (50).
